# EUROPÄISCHE PATENTSCHRIFT

(11) **EP 1 069 353 B1**
(45) Veröffentlichungstag und Bekanntmachung des Hinweises auf die Patenterteilung: **06.04.2005**
(21) Anmeldenummer: 00112741.4
(22) Anmeldetag: 16.06.2000
(51) Int. Cl.: F16K 1/52, F16K 47/08, F16K 15/18

(54) **Drosselventil**
Throttle valve
Vanne d'étranglement

(30) Priorität: 14.07.1999 DE 19932982
(43) Veröffentlichungstag der Anmeldung: 17.01.2001
(73) Patentinhaber: Festo AG & Co, 73734 Esslingen (DE)
(72) Erfinder: Stoll, Kurt, Dr. Dipl.-Ing., 73732 Esslingen (DE); Kees, Ulrich, 66424 Homburg (DE)
(74) Vertreter: Abel, Martin, Dipl.-Ing.

(56) Entgegenhaltungen:
- EP-A- 0 591 873
- WO-A-98/26168
- DE-A- 3 903 781

## Beschreibung

Die Erfindung betrifft ein Drosselventil.

Aus der EP 0 591 873 A1 ist ein Drosselventil bekannt, das einen in Richtung seiner Längssachse verstellbaren, in einem ortsfesten Käfig geführten Drosselkörper mit ringförmigen Aussparungen aufweist. Der Käfig besitzt Durchbrechungen, die bei dementsprechender Stellung des Drosselkörpers geschlossen oder falls die ringförmigen Aussparungen in den Bereich der Durchbrechungen gelangen, geöffnet oder teilweise geöffnet sind, so dass von einem Zuströmkanal zuströmende Druckluft über die Durchbrechungen ins Innere der Ventilkammer und von dort über einen zentralen Ausströmkanal abströmen kann. Je nach Axialstellung des Drosselkörpers in Bezug auf die Durchbrechungen im Käfig lassen sich also unterschiedlich Überströmquerschnitte einstellen.

Bekannte Drosselventile, wie sie beispielsweise in dem Fachbuch "Einführung in die Pneumatic", Meixner/Kobler, Seite 132, beschrieben werden, verfügen über einen kegeligen Drosselkörper, der in Abhängigkeit von der Drosselstellung mehr oder weniger weit in eine Öffnung eintaucht und dadurch dem zugeordneten Druckmedium unterschiedliche Überströmquerschnitte zur Verfügung stellt. Der Drosselkörper ist über ein Gewinde am Ventilgehäuse gelagert und lässt sich durch Verdrehen in seiner Axialposition bzw. Drosselstellung verändern.

Ein großer Nachteil dieser kegeligen Drosselkörper ist das nicht lineare Einstellverhalten. Der Überströmquerschnitt verändert sich in der Regel quadratisch im Verhältnis zur Veränderung der Axialposition des Drosselkörpers, so dass es sehr schwierig ist, reproduzierbare Einstellungen zu finden. Ein weiterer Nachteil besteht darin, dass das zwischen dem Drosselkörper und dem Ventilgehäuse vorhandene Gewindespiel beim Verändern der Drosselstellung geringfügige Pendelbewegungen des Drosselkegels zur Folge hat. Dies führt zu Unstetigkeiten im Überströmquerschnitt und erschwert die Einstellmaßnahmen um ein weiteres.

Es ist daher die Aufgabe der vorliegenden Erfindung, ein Drosselventil der eingangs genannten Art zu schaffen, mit dem sich sehr einfach ein lineares Verhalten realisieren lässt und das sehr exakte, reproduzierbare Einstellungen ermöglicht.

Zur Lösung dieser Aufgabe ist ein Drosselventil vorgesehen, mit einem in Richtung seiner Längsachse verstellbaren Drosselkörper, der in Abhängigkeit seiner Stellung (Drosselstellung) zwischen einem Einlass und einem Auslass einen mehr oder weniger großen Überströmquerschnitt freigibt, wobei der Drosselkörper einen zylindrischen Drosselkolben aufweist, der in jeder Drosselstellung koaxial in einen mit dem Einlass kommunizierenden Zuströmkanal eintaucht, mit dessen Wandung er im Bereich einer umfangsseitigen Abdichtzone in ständigem Dichtkontakt steht, wobei die bezüglich dem Zuströmkanal eingenommene Axialposition der Abdichtzone von der momentanen Drosselstellung abhängt, und wobei in der Wandung des Zuströmkanals einerseits mit dem Auslas kommunizierende Ausströmkanäle vorgesehen sind, die andererseits über entlang des Verstellweges der Abdichtzone verteilte Überströmöffnungen in den Zuströmkanal münden, wobei der Überströmquerschnitt ausschließlich durch den vor der Abdichtzone liegenden, zum einlassseitigen Abschnitt des Zuströmkanals hin freigegebenen Querschnitt der Überströmöffnungen definiert wird.

Der maßgeblich für den zur Verfügung gestellten Überströmquerschnitt verantwortliche Bestandteil des Drosselkörpers ist nun nicht mehr kegelig ausgeführt, sondern von einem zylindrischen Drosselkolben gebildet, der ständig in einen mit dem Einlass kommunizierenden Zuströmkanal eintaucht. Die zwischen dem Drosselkolben und der Zuströmkanalwandung vorhandene Abdichtzone verhindert dabei ein Vorbeiströmen des über den Zuströmkanal zugeführten Druckmediums am Drosselkolben. Folglich kann das Druckmedium nur über die der Abdichtzone zum einlaßseitigen Abschnitt des Zuströmkanals hin vorgelagerten Überströmöffnungen in der Zuströmkanalwandung abströmen. Je nach Drosselstellung läßt sich der insgesamt mit dem einlaßseitigen Abschnitt des Zuströmkanals kommunizierende Querschnitt an Überströmöffnungen, der den Überströmquerschnitt definiert, variabel vorgeben. Durch entsprechende Ausgestaltung und Anordnung der Überströmöffnungen läßt sich dabei sehr einfach ein lineares Einstellverhalten realisieren. Da der Überströmquerschnitt nicht wie beim Stand der Technik maßgeblich von einem den Drosselkörper umgebenden Ringspalt vorgegeben wird, wirken sich zudem eventuelle Instabilitäten in der Querposition des Drosselkolbens nicht nachteilig aus. Bedingt durch die Abdichtzone kann überdies ein relevantes Umströmen des Drosselkolbens verhindert werden, so daß die Pendelgefahr von Hause aus reduziert ist. Dabei kann durch das Zusammenwirken des Drosselkörpers und der Zuströmkanalwandung im Bereich der Abdichtzone auch ein Führungseffekt erreicht werden, der sich positiv auf die Lagestabilität des Drosselkörpers auswirkt.

Vorteilhafte Weiterbildungen der Erfindung gehen aus den Untersprüchen hervor.

Die Ausströmkanäle können zumindest teilweise von einzelnen bohrungsartigen Kanälen gebildet sein und/oder eine schlitzartige Gestalt aufweisen. Die einzelnen Kanäle können so platziert sein, daß ihre in den Zuströmkanal mündenden Überströmöffnungen auf einer Schraubenlinie entlang des Umfanges des Zuströmkanals liegen.

Des weiteren können die Ausströmkanäle auch zumindest teilweise von den Zwischenräumen einer porösen Zuströmkanalwandung gebildet sein. Letzteres läßt sich beispielsweise durch Verwendung eines Sintermetalls oder eines mit feinen Zwischenräumen versehenen Kunststoffmaterials erreichen.

Das Drosselventil kann ergänzend mit einem integrierten Rückschlagventil ausgestattet sein, so daß insgesamt ein kombiniertes Drossel-Rückschlag-Ventil vorliegt. Das Ventilglied des Rückschlagventils kann beispielsweise als Lippendichtung ausgeführt sein und ist inbesondere auch von der Zuströmkanalwandung getragen.

Die Zuströmkanalwandung kann durchaus unmittelbarer Bestandteil eines Ventilgehäuses des Drosselventils sein. Besonders zweckmäßig erscheint jedoch die Ausgestaltung der Zuströmkanalwandung als Bestandteil einer Ventilpatrone, die sich in ein beliebiges angepaßtes, mit einem Einlaß und einem Auslaß versehenes Gehäuse einsetzen läßt. Dies ermöglicht eine sehr einfache Integration des Drosselventils in beliebige fluidtechnische Einrichtungen, beispielsweise in die Gehäuse fluidbetätigter Antriebe.

Der Drosselkörper kann über ein Gewinde fixiert sein, so daß er zur Veränderung der Drosselstellung verdreht wird, was gleichzeitig eine axiale Verlagerung zur Folge hat. Als vorteilhaftere Betätigungsvariante wird allerdings eine Bauform angesehen, bei der das Drehbetätigungsglied drehbar und zugleich axial feststehend gelagert ist, während der Drosselkörper drehfest und zugleich axial verschiebbar gelagert ist, wobei zwischen dem Drehbetätigungsglied und dem Drosselkörper ein Gewindeeingriff vorliegt. Ein Verdrehen des Drehbetätigungsgliedes hat hier eine reine axiale Translationsbewegung des Drosselkörpers zur Folge, wobei die Axialposition des Drehbetätigungsgliedes unverändert bleibt. Dadurch ergeben sich ungeachtet der getroffenen Einstellung sehr kompakte Abmessungen. Außerdem begünstigt eine solche Bauform die Verwirklichung von Maßnahmen, die ein digitales Einstellverhalten des Drosselventils ermöglichen. So können Rastmittel zur lösbaren Fixierung des Drehbetätigungsgliedes in unterschiedlichen Drehpositionen vorgesehen sein, wobei das gewählte Rastermaß in direkter linearer Abhängigkeit zu dem vom Drosselkolben entsprechend freigebenen Überströmquerschnitt steht.

Nachfolgend wird die Erfindung anhand der beiliegenden Zeichnung näher erläutert. In dieser zeigen.
- Figur 1: eine erste Bauform des erfindungsgemäßen Drosselventils im Längsschnitt, wobei der Drosselkolben eine Schließstellung einnimmt, die ein Hindurchströmen des Druckmediums vom Einlaß zum Auslaß gänzlich verhindert,
- Figur 2: das Drosselventil aus Figur 1 bei veränderter Axialposition des Drosselkörpers in einer ausgewählten Drosselstellung,
- Figur 3: eine weitere Ausführungsform des Drosselventils in einer der Figur 1 entsprechenden Darstellungsweise, und
- Figur 4: einen sich auf die Betätigungsmittel beziehenden Ausschnitt einer weiteren Ausführungsform des Drosselventils, wiederum im Längsschnitt.

Alle abgebildeten Drosselventile 1 enthalten ein Gehäuse 2 mit einem Einlaß 3 und einem Auslaß 4 für ein fluidisches Druckmedium, insbesondere Druckluft. Der Einlaß 3 und der Auslaß 4 sind mit Mitteln zum Anschließen weiterführender Fluidleitungen ausgestattet, die vorliegend von Innengewinden gebildet sind.

Im Inneren des Gehäuses 2 befindet sich ein im Querschnitt kreiszylindrischer, linearer Zuströmkanal 5. Dessen einer axialer Endbereich, nachfolgend als einlaßseitiger Kanalabschnitt 6 bezeichnet, steht über mindestens einen ersten Fluidkanal 7 in ständiger Verbindung mit dem Einlaß 3.

Die den Zuströmkanal 5 umfangsseitig begrenzende Zuströmkanalwandung 8 ist von mehreren radial durchgehenden Ausströmkanälen 11 durchsetzt. Diese Ausströmkanäle 11 münden einerseits mit Überströmöffnungen 12 umfangsseitig in den Zuströmkanal 5. Andererseits stehen sie über mindestens einen zweiten Fluidkanal 13 mit dem Auslaß 4 in Verbindung.

Die Überströmöffnungen 12 sind über die Länge des Zuströmkanals 5 verteilt angeordnet. Um gleichwohl eine einfache Verbindung der Ausströmkanäle 11 zum Auslaß 4 zu schaffen, erstreckt sich um die Zuströmkanalwandung 8 herum ein koaxialer Ringraum 14, in dem die Ausströmkanäle 11 mit ihren den Überströmöffnungen 12 entgegengesetzten Öffnungen ausmünden. Dieser Ringraum 14 ist Bestandteil des zweiten Fluidkanals 13, der die Verbindung zum Auslaß 4 herstellt.

Das Drosselventil 1 enthält des weiteren einen länglichen Drosselkörper 15, der derart an dem Gehäuse 2 gelagert ist, daß er in Richtung seiner Längsachse 16 linear verstellbar ist. Der Drosselkörper 15 ist für die Drosselungsintensität des Drosselventils 1 verantwortlich, indem er in Abhängigkeit von seiner momentanen Axialposition einen mehr oder weniger großen Überströmquerschnitt zwischen dem Einlaß 3 und dem Auslaß 4 freigibt. Die hierbei vom Drosselkörper 15 eingenommenen Positionen seien als Drosselstellungen bezeichnet.

Der Drosselkörper 15 ist koaxial zu dem Zuströmkanal 5 angeordnet. An einem seiner beiden axialseitigen Endbereiche ist er mit einem zylindrischen Drosselkolben 17 versehen, mit dem er von dem dem einlaßseitigen Kanalabschnitt 6 entgegengesetzten äußeren Endbereich 18 des Zuströmkanals 5 her in diesen Zuströmkanal 5 eintaucht. Die Querschnittskontur des Drosselkolbens 17 entspricht zumindest im wesentlichen derjenigen des Zuströmkanals 5, so daß der Drosselkörper 15 im Inneren des Zuströmkanals 5 mit geringstmöglichem Radialspiel axial beweglich angeordnet ist. Die axiale Verstellrichtung des Drosselkolbens 17, die mit der Längsachse 16 zusammenfällt, ist durch Doppelpfeil 19 verdeutlicht.

Koaxial zwischen dem Drosselkolben 17 und der Innenfläche der Zuströmkanalwandung 8 ist eine ringförmige erste Abdichtzone 20 definiert. Sie ist beim Ausführungsbeispiel dadurch definiert, daß umfangsseitig am Drosselkolben 17 eine ringförmige Dichtung 22 festgelegt ist, die an der Zuströmkanalwandung 8 gleitbeweglich anliegt. Diese erste Abdichtzone 20 liegt zweckmäßigerweise in unmittelbarer axialer Nachbarschaft zu der dem einlaßseitigen Kanalabschnitt 6 des Zuströmkanals 5 zugewandten vorderen Stirnfläche 23 des Drosselkolbens 17.

Der Drosselkolben 17 stellt mithin eine den Zuströmkanal 5 auf der dem einlaßseitigen Kanalabschnitt 6 entgegengesetzten Seite dicht verschließende bewegliche Wand dar. Im Zusammenhang mit den in Längsrichtung des Zuströmkanals 5 und somit entlang des Verstellweges der ersten Abdichtzone 20 verteilt angeordneten Überströmöffnungen 12 hat dies den Effekt, daß in Abhängigkeit von der jeweiligen Drosselstellung der zum einlaßseitigen Kanalabschnitt 6 hin freigegebene Querschnitt der Überströmöffnungen 12 variiert. Dieser Querschnitt stellt den durch das Drosselventil gewährleisteten Überströmquerschnitt dar, der die vom Einlaß 3 zum Auslaß 4 hindurchströmende Fluidmenge vorgibt.

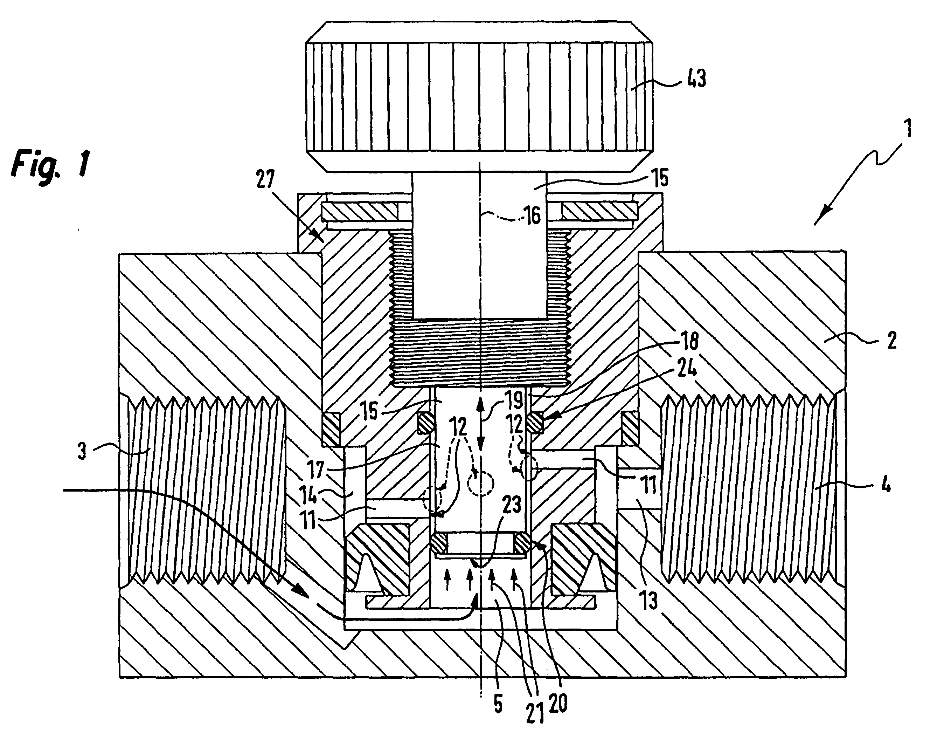

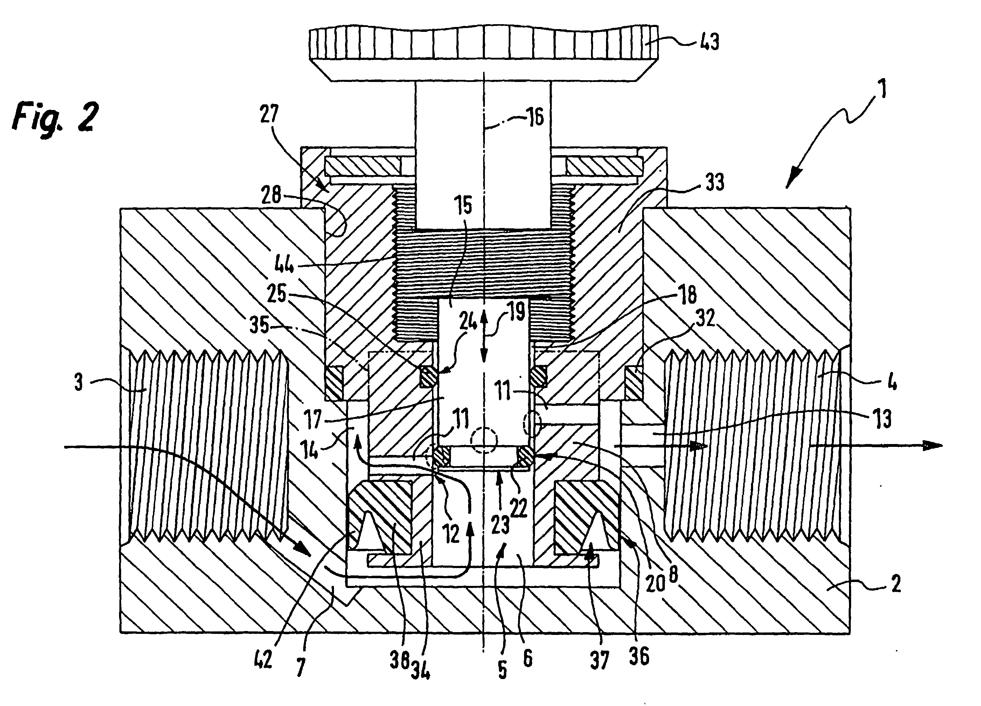

Beim Ausführungsbeispiel der Figuren 1 und 2 sind die Ausströmkanäle 11 von einzelnen bohrungsartigen Kanälen gebildet, die die Zuströmkanalwandung 8 zwischen dem Zuströmkanal 5 und dem Ringraum 14 radial durchsetzen. Die axial verteilte Anordnung der Überströmöffnungen 12 ist dabei dadurch realisiert, daß die Überströmöffnungen 12 entlang einer gedachten Schraubenlinie entlang dem Umfang des Zuströmkanals 5 verteilt angeordnet sind. Dies hat auch den Vorteil, daß bei Bedarf sich axial überlappende Überströmöffnungen 12 realisiert werden können.

Es wäre auch möglich, die Ausströmkanäle 11 schlitzartig auszuführen. Auch ist die Länge der Ausströmkanäle prinzipiell beliebig, sie könnten durchaus auch von nur sehr kurzen Wanddurchbrechungen gebildet sein.

Die Figur 1 zeigt das Drosselventil 1 in einer Schließstellung, in der der zur Verfügung gestellte Überströmquerschnitt zwischen Einlaß 3 und Auslaß 4 gleich Null ist. Der Drosselkörper 15 ist hier so weit axial in den Zuströmkanal 5 eingetaucht, daß die erste Abdichtzone 20 zwischen den Überströmöffnungen 12 und dem mit dem Einlaß 3 verbundenen Kanalabschnitt 6 des Zuströmkanals 5 angeordnet ist. Der am Einlaß 3 anstehende Druck wirkt somit gemäß Pfeilen 21 nur auf die vordere Stirnfläche 23 des Drosselkolbens 17, ohne zu einer der Überströmöffnungen 12 gelangen zu können. Die Figur 1 macht deutlich, daß das beispielsgemäße Drosselventil 1 den Vorteil hat, bei Bedarf die Verbindung zwischen dem Einlaß 3 und dem Auslaß 4 mit zuverlässiger Abdichtung zu unterbrechen.

Die Figur 2 zeigt eine beliebige Drosselstellung, bei der die erste Abdichtzone 20 so weit in Richtung des äußeren Endbereiches 18 des Zuströmkanals 5 verlagert ist, daß zumindest eine der Überströmöffnungen 12 zumindest teilweise mit dem einlaßseitigen Kanalabschnitt 6 in Verbindung steht. Das Druckmedium kann daher durch den freigegebenen Überströmquerschnitt in den Ringraum 14 und von dort zum Auslaß 4 ausströmen.

Um zu verhindern, daß über diejenigen Ausströmkanäle 11 hinweg, die auf der dem einlaßseitigen Kanalabschnitt 6 entgegengesetzten Axialseite der ersten Abdichtzone 20 in den Zuströmkanal 5 einmünden, Druckluft am Drosselkörper 15 vorbei nach außen abströmt, ist zwischen der Zuströmkanalwandung 8 und dem Drosselkörper 15 im äußeren Endbereich 18 des Zuströmkanals 5 eine zweite Abdichtzone 24 vorgesehen. Ihre Axialposition bezüglich des Zuströmkanals 5 ist stets unverändert und sie wird beispielsgemäß dadurch realisiert, daß axial außerhalb der Überströmöffnungen 12 eine den Drosselkolben 17 unter Abdichtung koaxial umschließende ringförmige Dichtung 25 an der Zuströmkanalwandung 8 vorgesehen ist.

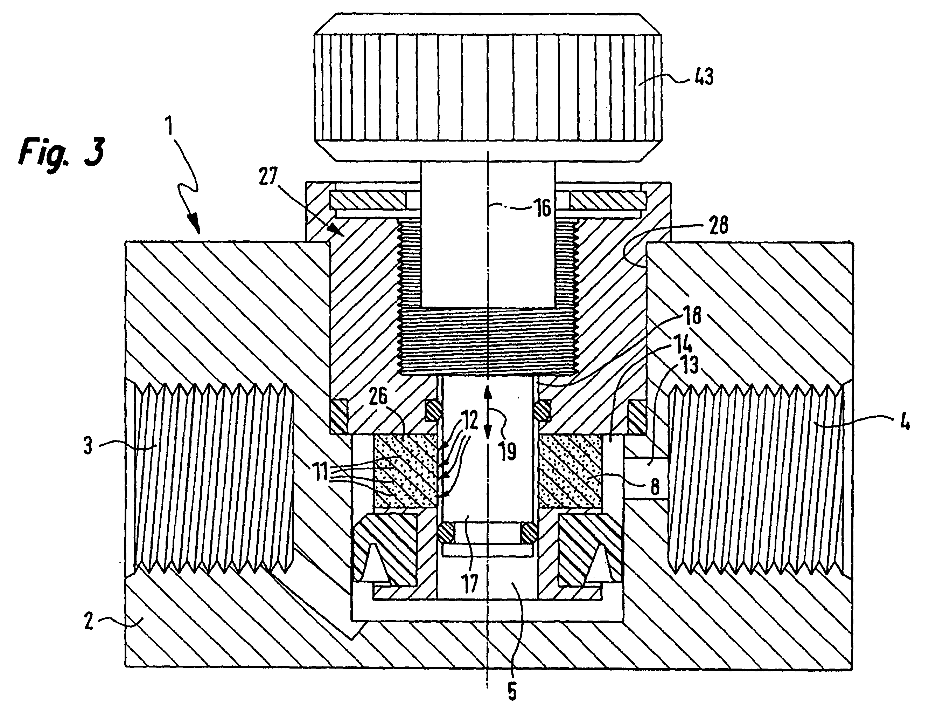

Das in Figur 3 abgebildete Drosselventil 1 stimmt mit demjenigen der Figuren 1 und 2 abgesehen von der Realisierung der Ausströmkanäle 11 überein. Die Zuströmkanalwandung 8 ist hier zumindest teilweise porös ausgeführt, wobei die porenartigen feinen Zwischenräume die Abströmkanäle 11 bilden und die nach radial innen und radial außen offenen Zwischenräume die Überströmöffnungen 12 und die äußeren Öffnungen der Ausströmkanäle 11 darstellen. Der poröse Charakter der Zuströmkanalwandung 8 kann beispielsweise durch eine Ausgestaltung aus Sintermaterial, insbesondere Sintermetall, realisiert werden, auch Kunststoffmaterialien können eingesetzt werden. Beim Ausführungsbeispiel ist der poröse Bereich der Zuströmkanalwandung 8 von einem entsprechend strukturierten Ringkörper 26 gebildet, der beispielsweise durch Verklebung mit den übrigen Bestandteilen der Zuströmkanalwandung 8 verbunden sein kann.

Es versteht sich, daß die verschiedenen Ausführungsformen der Ausströmkanäle 11 auch beliebig miteinander kombiniert werden können.

Die abgebildeten Drosselventile haben den weiteren Vorteil, daß die Zuströmkanalwandung 8 Bestandteil einer in das Gehäuse 2 eingesetzten Ventilpatrone 27 ist. Das Gehäuse 2 verfügt über eine Ausnehmung 28, in der die Ventilpatrone 27 unter Abdichtung fest einsitzt. Zur Abdichtung kann mindestens eine vorzugsweise angespritzte Dichtung 32 beitragen, wobei an dieser Stelle erwähnt sein soll, daß auch alle übrigen bei dem Drosselventil zum Einsatz gelangenden Dichtungen zweckmäßigerweise an den zugehörigen Träger fest angeformt sind, beispielsweise durch ein Spritzgießverfahren.

Die Ventilpatrone 27 verfügt beim Ausführungsbeispiel über einen beispielsweise zylindrischen Haltekörper 33, der mit der Zuströmkanalwandung 8 in fester Verbindung steht, die beim Ausführungsbeispiel von einem hülsenartigen koaxialen Fortsatz 34 des Haltekörpers 33 gebildet ist. Während der Haltekörper 33 fest in einem komplementären Abschnitt der Ausnehmung 28 einsitzt, verfügt der Fortsatz 34 über einen im Vergleich zum zugeordneten Abschnitt der Ausnehmung 28 geringeren Durchmesser, wobei der verbleibende Zwischenraum den oben erwähnten Ringraum 14 bildet. Die Ventilpatrone 27 kann insbesondere eingeschraubt oder eingeklebt oder vorzugsweise eingepresst sein.

In Figur 2 ist bei 35 strichpunktiert angedeutet, daß die Zuströmkanalwandung 8 auch als bezüglich dem Haltekörper 33 separates Bauteil ausgeführt sein kann, das fest an dem Haltekörper 33 verankert ist, wobei es seinerseits bezüglich dem Haltekörper 33 einen Einsatzkörper darstellen kann.

Das Drosselventil gemäß den Ausführungsbeispielen ist als Drossel-Rückschlag-Ventil konzipiert. Es verfügt über einen By-Pass-Kanal 36, der von der Stellung des Drosselkörpers 15 unbeeinflußt ist und eine unidirektionale fluidische Parallelschaltung zwischen Einlaß und Auslaß bezüglich den Ausströmkanälen 11 bewirkt. Es läßt eine Rückströmung des Druckmediums vom Auslaß 4 zum Einlaß 3 zu, während es in Gegenrichtung sperrt.

Beim Ausführungsbeispiel ist das zusätzliche Rückschlagventil 37 dadurch realisiert, daß zwischen dem Außenumfang des Fortsatzes 34 und dem Innenumfang der Ausnehmung 28 ein Lippendichtring 38 mit flexibler Dichtlippe 42 platziert ist. Er ist zweckmäßigerweise an dem Fortsatz 34 festgelegt, wobei die biegeelastische Dichtlippe 42 an der Innenfläche der Ausnehmung 28 anliegt. Auf diese Weise bildet der Lippendichtring 38 einen Bestandteil der Ventilpatrone 27 und kann gemeinsam mit dieser gehandhabt werden.

Es versteht sich, daß anstelle des Lippendichtringes 38 auch ein anderes geeignetes Ventilglied zum Einsatz gelangen kann.

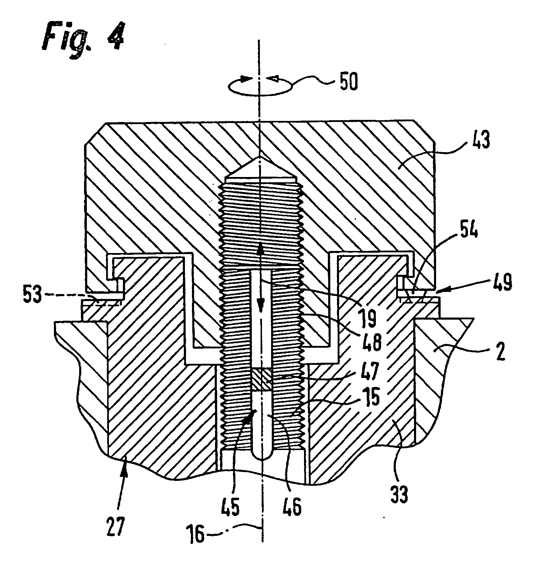

Die axiale Verstellung des Drosselkörpers 15 mit seinem Drosselkolben 17 wird bei den Ausführungsbeispielen jeweils durch ein Drehbetätigungsglied 43 verursacht. Dieses steht bei den Ausführungsbeispielen der Figuren 1 bis 3 in drehfester Verbindung mit dem Drosselkörper 15, der seinerseits über eine Gewindeverbindung 44 in dem Haltekörper 33 verschraubbar gelagert ist. Beim Drehen des Drehbetätigungsgliedes 43 dreht sich der Drosselkörper 15 mit und wird gleichzeitig axial verlagert. Da die hierbei auftretende Veränderung des Überstandes des Drehbetätigungsgliedes 43 bezüglich des Gehäuses 2 unter gewissen Bedingungen nachteilig ist, wird anhand der Figur 4 eine alternative Realisierungsform der dem Drosselkörper 15 zugeordneten Drehbetätigungsmittel vorgeschlagen.

Gemäß Figur 4 ist zwar weiterhin ein Drehbetätigungsglied 43 vorgesehen, das jedoch zugleich axial unbeweglich an dem Haltekörper 33 fixiert ist. Der Drosselkörper 15 seinerseits ist lediglich im Rahmen einer reinen Linearbewegung axial verstellbar, indem er durch Verdrehsicherungsmittel 45, die seine Axialbewegung nicht beeinträchtigen, drehfest bezüglich dem Haltekörper 33 fixiert ist. Die Verdrehsicherungsmittel 45 können eine am Drosselkörper 15 vorgesehene Längsnut 46 aufweisen, in die ein am Haltekörper 33 festgelegter Sicherungsvorsprung 47 eingreift, oder umgekehrt.

Des weiteren ist zwischen dem Drehbetätigungsglied 43 und dem Drosselkörper 15 eine Gewindeverbindung 48 vorgesehen. Der Drosselkörper 15 kann beispielsweise mit einem Außengewinde in ein am Drehbetätigungsglied 43 vorgesehenes Innengewinde eingreifen, oder umgekehrt.

Wird das Drehbetätigungsglied 43 gemäß Doppelpfeil 50 verdreht, behält es seine Axialposition unverändert bei. Allerdings führt der verdrehgesicherte Drosselkörper 15 eine axiale Verstellbewegung gemäß Doppelpfeil 19 aus.

Beim Ausführungsbeispiel sind des weiteren Rastmittel 49 vorgesehen, die eine lösbare stufenweise Fixierung des Drehbetätigungsgliedes 43 in unterschiedlichen Drehpositionen ermöglichen. Beispielsweise kann am Haltekörper 33 eine sich entlang eines Kreises oder eines Kreisbogens erstreckende Rastverzahnung 53 vorgesehen sein, in die mindestens ein am Drehbetätigungsglied 43 vorgesehener Rastvorsprung 54 eingreift, oder umgekehrt.

Die Drosselventile des Ausführungsbeispieles ermöglichen die Realisierung eines linearen Verhaltens, derart, daß die eingestellte Drosselungsintensität linear von der vorgegebenen Drosselstellung des Drosselkolbens 17 abhängt. Mit einer einfachen Skala lassen sich sehr leicht reproduzierbare Einstellungen vornehmen, zumal die Einstellvorgänge selbst nicht von Durchflußschwankungen begleitet werden.

Im Zusammenhang mit einzelnen verteilten Überströmöffnungen 12 gemäß den Ausführungsbeispielen der Figuren 1 bis 3 wäre es beispielsweise möglich, die Überströmöffnungen 12 in Größe und Verteilung derart auszuführen, daß pro Drehschritt des Drehbetätigungsgliedes 43, der beispielsweise durch die Rastmittel 49 vorgegeben sein kann, genau ein weiterer zusätzlicher Zuströmkanal 11 freigegeben oder verschlossen wird und sich dementsprechend der zur Verfügung gestellte Überströmquerschnitt ändert.

Die Funktionen des Haltekörpers 33 und des Fortsatzes 34 könnten unmittelbar von Bestandteilen des Gehäuses 2 übernommen werden. Die vorliegende Integration in einer separaten Ventilpatrone 27, die also auch den Drosselkörper 15 und das Drehbetätigungsglied 43 sowie gegebenenfalls das Ventilglied des Rückschlagventils 37 trägt, hat jedoch den Vorteil sehr universeller Einsatzmöglichkeiten. Sofern nur eine entsprechend angepaßte Ausnehmung 28 vorgesehen wird, kann die Ventilpatrone 27 in jedes beliebige Gehäuse integriert werden, also beispielsweise auch unmittelbar in das Gehäuse eines fluidischen Antriebes, insbesondere in einer Funktion als Geschwindigkeitsregulierventil.

Die Drosselventile des Ausführungsbeispieles sind für manuelle Betätigung ausgelegt. Möglich wäre aber auch eine Auslegung für fluidische - insbesondere pneumatische - und/oder elektrische Betätigung. Dem Drosselkörper könnte in diesem Fall eine geeignete fluidische und/oder elektrische Betätigungseinrichtung zugeordnet sein.

## Patentansprüche

1. Drosselventil, mit einem in Richtung seiner Längsachse (16) verstellbaren Drosselkörper (15), der in Abhängigkeit von seiner Drosselstellung zwischen einem Einlass (3) und einem Auslass (4) einen mehr oder weniger großen Überströmquerschnitt freigibt, wobei der Drosselkörper (15) einen zylindrischen Drosselkolben (17) aufweist, der in jeder Drosselstellung koaxial in einen mit dem Einlass (3) kommunizierenden Zuströmkanal (5) eintaucht, mit dessen Wandung (8) er im Bereich einer umfangsseitigen Abdichtzone (20) in ständigem Dichtkontakt steht, wobei die bezüglich dem zuströmkanal (5) eingenommene Axialposition der Abdichtzone (20) von der momentanen Drosselstellung abhängt, und wobei in der Wandung (8) des Zuströmkanals (5) einerseits mit dem Auslass (4) kommunizierende Ausströmkanäle (11) vorgesehen sind, die andererseits über entlang des Verstellweges der Abdichtzone (20) verteilte Überströmöffnungen (12) in den Zuströmkanal (5) münden, wobei der Überströmquerschnitt ausschließlich durch den vor der Abdichtzone (20) liegenden, zum einlassseitigen Abschnitt (6) des Zuströmkanals (5) hin freigegebenen Querschnitt der Überströmöffnungen (12) definiert wird.

2. Drosselventil nach Anspruch 1, **dadurch gekennzeichnet, daß** die Ausströmkanäle (11) zumindest teilweise von einzelnen bohrungsartigen Kanälen gebildet sind.

3. Drosselventil nach Anspruch 1 oder 2, **dadurch gekennzeichnet, daß** die Ausströmkanäle (11) zumindest teilweise schlitzartig ausgeführt sind.

4. Drosselventil nach einem der Ansprüche 1 bis 3, **dadurch gekennzeichnet, daß** die Überströmöffnungen (12) entlang einer Schraubenlinie über den Umfang des Zuströmkanals (5) verteilt sind.

5. Drosselventil nach einem der Ansprüche 1 bis 4, **dadurch gekennzeichnet, daß** die Ausströmkanäle (11) zumindest teilweise von den Zwischenräumen einer porösen Zuströmkanalwandung (8) gebildet sind.

6. Drosselventil nach Anspruch 5, **dadurch gekennzeichnet, daß** die Zuströmkanalwandung (8) im Bereich der Ausströmkanäle (11) aus Sintermaterial besteht.

7. Drosselventil nach einem der Ansprüche 1 bis 6, **dadurch gekennzeichnet, daß** koaxial um die Zuströmkanalwandung (8) herum ein Ringraum (14) definiert ist, in den zum einen die Ausströmkanäle (11) ausmünden und der zum anderen mit dem Auslaß (4) kommuniziert.

8. Drosselventil nach einem der Ansprüche 1 bis 7, **gekennzeichnet durch** mindestens einen vom Drosselkörper (15) unbeeinflußten By-Pass-Kanal zwischen dem Einlaß (3) und dem Auslaß (4), in den ein zum Auslaß (4) hin sperrendes Rückschlagventil (37) eingeschaltet ist.

9. Drosselventil nach Anspruch 8, **dadurch gekennzeichnet, daß** das Rückschlagventil (37) ein von der Zuströmkanalwandung (8) getragenes und vorzugsweise als Lippendichtring (38) ausgeführtes Ventilglied aufweist.

10. Drosselventil nach einem der Ansprüche 1 bis 9, **dadurch gekennzeichnet, daß** die Zuströmkanalwandung (8) und der zugeordnete Drosselkörper (15) Bestandteil einer in ein Gehäuse (2) eingesetzten oder einsetzbaren Ventilpatrone (27) ist.

11. Drosselventil nach Anspruch 10, **dadurch gekennzeichnet, daß** die Zuströmkanalwandung (8) ein in einem Haltekörper (33) der Ventilpatrone (27) verankertes Einsatzteil ist.

12. Drosselventil nach einem der Ansprüche 1 bis 11, **dadurch gekennzeichnet, daß** zwischen der Zuströmkanalwandung (8) und dem Drosselkörper (15) auf der dem einlaßseitigen Abschnitt (6) des Zuströmkanals (5) axial entgegengesetzten Seite der Überströmöffnungen (12) eine weitere Abdichtzone (24) vorgesehen ist.

13. Drosselventil nach einem der Ansprüche 1 bis 12, **dadurch gekennzeichnet, daß** dem Drosselkörper (15) zu seiner linearen Verstellung ein Drehbetätigungsglied (43) zugeordnet ist.

14. Drosselventil nach Anspruch 13, **dadurch gekennzeichnet, daß** das Drehbetätigungsglied (43) drehbar und zugleich axial feststehend gelagert ist, während der Drosselkörper (15) drehfest und zugleich axial verschiebbar gelagert ist, wobei zwischen dem Drehbetätigungsglied (43) und dem Drosselkörper (15) eine Gewindeverbindung (48) vorliegt.

15. Drosselventil nach Anspruch 13 oder 14, **gekennzeichnet durch** Rastmittel (49) zur lösbaren Fixierung des Drehbetätigungsgliedes (43) in unterschiedlichen Drehpositionen.

## Claims

1. Restrictor valve, with a restrictor body (15) adjustable in the direction of its longitudinal axis (16) and providing, in dependence on its restriction position, a larger or smaller transfer cross-section between an inlet (3) and an outlet (4), the restrictor body (15) incorporating a cylindrical metering piston (17) dipping, in each restriction position, into a feed passage (5) communicating with the inlet (3), with the wall (8) of which it is in permanent sealing contact within a circumferential sealing zone (20), wherein the axial position of the sealing zone (20) relative to the feed passage (5) is determined by the current restriction position and wherein the wall (8) of the feed passage (5) is provided with discharge passages (11) communicating with the outlet (4) on the one hand and terminating in the feed passage (5) via transfer ports (12) distributed along the traversing distance of the sealing zone (20) on the other hand, wherein the transfer cross-section is exclusively defined by the cross-section of the transfer ports (12) located upstream of the sealing zone (20) and opened up towards the inlet-side section (6) of the feed passage (5).

2. Restrictor valve according to claim 1, **characterised in that** the discharge passages (11) are at least partially designed as individual bore-type passages.

3. Restrictor valve according to claim 1 or 2, **characterised in that** the discharge passages (11) are at least partially designed slot-like.

4. Restrictor valve according to any of claims 1 to 3, **characterised in that** the transfer ports (12) are distributed along a helical path over the circumference of the feed passage (5).

5. Restrictor valve according to any of claims 1 to 4, **characterised in that** the discharge passages (11) are at least partially represented by the interstices of a porous feed passage wall (8).

6. Restrictor valve according to claim 5, **characterised in that** the feed passage wall (8) is made of a sintered material in the area of the discharge passages (11).

7. Restrictor valve according to any of claims 1 to 6, **characterised in that** a coaxial annular chamber (14) is defined around the feed passage wall (8), where the discharge passages (11) terminate on the one hand and which communicates with the outlet (4) on the other hand.

8. Restrictor valve according to any of claims 1 to 7, **characterised by** at least one bypass passage unaffected by the restrictor body (15) and located between the inlet (3) and the outlet (4), wherein a check valve (37) blocking towards the outlet (4) is installed.

9. Restrictor valve according to claim 8, **characterised in that** the check valve (37) incorporates a valve member supported by the feed passage wall (8) and preferably designed as a lip sealing ring (38).

10. Restrictor valve according to any of claims 1 to 9, **characterised in that** the feed passage wall (8) and the associated restrictor body (15) are parts of a valve cartridge (27) installed or installable into a housing (2).

11. Restrictor valve according to claim 10, **characterised in that** the feed passage wall (8) is an insert anchored in a retaining body (33) of the valve cartridge (27).

12. Restrictor valve according to any of claims 1 to 11, **characterised in that** a further sealing zone (24) is provided between the feed passage wall (8) and the restrictor body (15) on that side of the transfer ports (12) which is axially opposite the inlet-side section (6) of the feed passage (5).

13. Restrictor valve according to any of claims 1 to 12, **characterised in that** a rotary operating element (43) is assigned to the restrictor body (15) for its linear adjustment.

14. Restrictor valve according to claim 13, **characterised in that** the rotary operating element (43) is rotatably mounted while being axially located, whereas the restrictor body is (15) secured against rotation while being axially movable, with a threaded connection (48) being provided between the rotary operating element (43) and the restrictor body (15).

15. Restrictor valve according to claim 13 or 14, **characterised** locking means (49) for releasably locking the rotary operating element (43) in different rotary positions.

## Revendications

1. Vanne d'étranglement avec un corps d'étranglement (15) réglable dans le sens de son axe longitudinal (16), corps qui en fonction de sa position d'étranglement entre une admission (3) et une évacuation (4) libère une section de décharge plus ou moins importante, le corps d'étranglement (15) comportant un piston d'étranglement (17) cylindrique qui, dans chaque position d'étranglement, immerge coaxialement dans un canal d'afflux (5) communiquant avec l'admission (3), avec la paroi (8) duquel il est en contact hermétique permanent dans l'espace d'une zone d'étanchéité (20) périphérique, sachant que la position axiale de la zone d'étanchéité (20), prise par rapport au canal d'afflux (5) dépend de la position d'étranglement momentanée, et sachant que des canaux d'écoulement (11) communiquant avec l'évacuation (4) sont prévus d'un côté dans la paroi (8) du canal d'afflux (5), lesquels d'un autre côté débouchent dans le canal d'afflux (5) via des orifices de décharge (12) répartis le long du parcours de la zone d'étanchéité (20), la section de décharge étant exclusivement définie par la section des orifices de décharge (12), située devant la zone d'étanchéité (20) et libérée en direction de la partie (6) côté entrée du canal d'afflux (5).

2. Vanne d'étranglement selon la revendication 1, **caractérisée en ce que** les canaux d'écoulement (11) sont formés au moins en partie par des canaux individuels semblables à des forures.

3. Vanne d'étranglement selon la revendication 1 ou 2, **caractérisée en ce que** les canaux d'écoulement (11) sont réalisés au moins en partie comme des fentes.

4. Vanne d'étranglement selon l'une des revendications 1 à 3, **caractérisée en ce que** les orifices de décharge (12) sont répartis le long d'une hélice sur la périphérie du canal d'afflux (5).

5. Vanne d'étranglement selon l'une des revendications 1 à 4, **caractérisée en ce que** les canaux d'écoulement (11) sont formés au moins en partie par des espaces intermédiaires d'une paroi (8) de canal d'afflux poreuse.

6. Vanne d'étranglement selon la revendication 5, **caractérisée en ce que** la paroi (8) du canal d'afflux dans la zone des canaux d'écoulement (11) se compose de matériau fritté.

7. Vanne d'étranglement selon l'une des revendications 1 à 6, **caractérisée en ce qu'**un espace annulaire (14) est défini coaxialement tout autour de la paroi (8) du canal d'afflux, espace annulaire dans lequel débouchent d'une part les canaux d'écoulement (11), et qui d'autre part communique avec l'évacuation (4).

8. Vanne d'étranglement selon l'une des revendications 1 à 7, **caractérisée par** au moins un canal de dérivation non influencé par le corps d'étranglement (15) entre l'admission (3) et l'évacuation (4), canal dans lequel est activée une soupape de retenue (37) faisant barrière en direction de l'évacuation (4).

9. Vanne d'étranglement selon la revendication 8, **caractérisée en ce que** la soupape de retenue (37) comporte un élément de soupape réalisé de préférence comme bague d'étanchéité à lèvres (38) et porté par la paroi (8) du canal d'afflux.

10. Vanne d'étranglement selon l'une des revendications 1 à 9, **caractérisée en ce que** la paroi (8) du canal d'afflux et le corps d'étranglement (15) associé font partie d'une cartouche de soupapes (27) insérée ou pouvant être insérée dans un boîtier (2).

11. Vanne d'étranglement selon la revendication 10, **caractérisée en ce que** la paroi (8) du canal d'afflux est une pièce intercalaire ancrée dans un corps de retenue (33) de la cartouche de soupapes (27).

12. Vanne d'étranglement selon l'une des revendications 1 à 11, **caractérisée en ce qu'**une autre zone d'étanchéité (24) est prévue entre la paroi (8) du canal d'afflux et le corps d'étranglement (15) du côté des orifices de décharge (12), situé axialement à l'opposé de la partie (6) côté entrée du canal d'afflux (5).

13. Vanne d'étranglement selon l'une des revendications 1 à 12, **caractérisée en ce qu'**un élément rotatif d'actionnement (43) est attribué au corps d'étranglement (15) en vue de son mouvement linéaire.

14. Vanne d'étranglement selon la revendication 13, **caractérisée en ce que** l'élément rotatif d'actionnement (43) est pivotant et simultanément axialement fixe tandis que le corps d'étranglement (15) n'est pas rotatif et est simultanément déplaçable axialement, sachant qu'il existe un assemblage à vis (48) entre l'élément rotatif d'actionnement (43) et le corps d'étranglement (15).

15. Vanne d'étranglement selon la revendication 13 ou 14, **caractérisée par** des crans (49) pour la fixation amovible de l'élément rotatif d'actionnement (43) dans différentes positions de rotation.
